# FASCICULE DE BREVET EUROPEEN

(11) **EP 4 047 424 B1**
(45) Date de publication et mention de la délivrance du brevet: **04.12.2024**
(21) Numéro de dépôt: 21157794.5
(22) Date de dépôt: 18.02.2021
(51) Int. Cl.: F16C 11/04, G04B 31/00, F16C 11/12, G04B 17/04

(54) **COMPOSANT À PIVOT FLEXIBLE, NOTAMMENT POUR L' HORLOGERIE**
KOMPONENTE MIT FLEXIBLEM ZAPFEN, INSBESONDERE FÜR UHRWERK
COMPONENT WITH FLEXIBLE PIVOT, IN PARTICULAR FOR CLOCKMAKING

(43) Date de publication de la demande: 24.08.2022
(73) Titulaire: Patek Philippe SA Genève, 1204 Genève (CH)
(72) Inventeur: Henein, Simon, 2000 Neuchâtel (CH); Thalmann, Etienne, 1007 Lausanne (CH); Chabloz, David, 1228 Plan-les-Ouates (CH)
(74) Mandataire: Micheli & Cie SA

(56) Documents cités:
- EP-A1- 3 476 748
- "Flexure Pivot Oscillators for Mechanical Watches", 18 June 2020, article ETIENNE F. G. THALMANN: "Flexure Pivot Oscillators for Mechanical Watches", XP055731304, DOI: 10.5075/epfl-thesis-8802

## Description

La présente invention concerne un composant à pivot flexible, notamment pour l'horlogerie, et plus particulièrement un oscillateur horloger à pivot flexible destiné à remplir la fonction d'un balancier-spiral.

Les composants à pivot flexible comprennent une partie rigide mobile suspendue à un support par un agencement de parties élastiques, cet agencement de parties élastiques permettant à la partie rigide mobile de pivoter par rapport au support sans axe de rotation physique, donc sans frottements secs, autour d'un axe de rotation virtuel. Les avantages de ces composants sont nombreux. En particulier, ils ne génèrent pas d'usure, ne produisent pas de débris polluants, n'ont pas besoin d'être lubrifiés, ne présentent pas de risque de grippage et peuvent être fabriqués de façon monolithique.

Les composants à pivot flexible présentent toutefois des inconvénients :
- l'axe de rotation virtuel fait l'objet de déplacements parasites qui affectent la précision de fonctionnement et rendent la raideur du pivot flexible sensible à la gravité et aux autres accélérations linéaires ;
- la course de la partie rigide mobile est limitée ;
- le couple du pivot flexible est non linéaire en fonction de l'angle de rotation, ce qui affecte l'isochronisme dans le cas d'oscillateurs horlogers ;
- réaliser le composant dans un seul plan n'est pas toujours possible.

Pour minimiser les déplacements parasites de l'axe de rotation virtuel, il a été proposé par W.H. Wittrick, dans le contexte d'un composant à lames croisées séparées, donc à structure non plane, de faire se croiser les lames élastiques en un point situé à 12,7% de leur longueur. Cette solution, cependant, diminue la course de la partie rigide mobile en comparaison par exemple de lames se croisant à 50% de leur longueur.

La demande de brevet WO 2018/100122 décrit un composant à pivot flexible plan pour pièce d'horlogerie dans lequel une partie mobile inertielle est divisée en N portions rigides reliées entre elles par N liaisons élastiques de couplage, le pivot flexible comprenant N liaisons élastiques de suspension reliant respectivement les portions rigides au support. Le pivot flexible et les N liaisons élastiques de couplage permettent aux portions rigides de la partie inertielle de se déplacer à la fois en rotation et en translation radiale par rapport à un axe central virtuel. Cette solution minimise les déplacements parasites de l'axe de rotation tout en évitant les surcontraintes. En revanche, le caractère élastique de la partie mobile inertielle rend plus difficile la gestion de la dilatation thermique et de la compensation thermique à apporter, et dégrade la tenue aux chocs du composant. En outre, du fait de sa partie inertielle divisée en N portions, ce composant ne peut être utilisé qu'en tant qu'oscillateur, et non comme pivot générique, et la partie mobile et le support ne peuvent être inversés.

La demande de brevet EP 3476748 décrit un mécanisme pivot comprenant une pièce mobile reliée à une pièce fixe par trois liaisons flexibles. Les pièces fixe et mobile sont en forme d'anneaux superposés. Les liaisons flexibles relient les pièces fixe et mobile en parallèle et comprennent chacune, en série, une première lame principale, une jonction rigide intermédiaire et une deuxième lame principale. Les jonctions rigides intermédiaires sont au centre du mécanisme et sont séparées les unes des autres par des fentes d'expansion qui s'élargissent lors de la rotation de la pièce mobile. Les jonctions intermédiaires sont en outre reliées directement les unes aux autres par des éléments de couplage formés chacun par deux lames parallèles.

On connaît aussi la demande de brevet EP 3992729 opposable au titre de l'article 54(3) CBE et qui décrit un guidage flexible avec table de translation pour mécanisme résonateur rotatif. Etienne F. G. Thalmann décrit dans le document "Flexure Pivot Oscillators for Mechanical Watches" un composant à pivot flexible plan et monolithique, dont les parties rigides intermédiaires ne sont pas reliées directement par des troisièmes organes élastiques. U

La présente invention vise à remédier, en partie au moins, aux inconvénients susmentionnés et propose à cette fin un composant à pivot flexible selon la revendication 1, des modes de réalisation particuliers étant définis dans les revendications dépendantes.

La présente invention propose en outre un oscillateur horloger et une pièce d'horlogerie, par exemple une montre-bracelet, une montre de poche, une montre pendentif ou une pendulette, comprenant un tel composant à pivot flexible.

D'autres caractéristiques et avantages de la présente invention apparaîtront à la lecture de la description détaillée suivante faite en référence aux dessins annexés dans lesquels :
- les figures 1 à 10 sont des schémas cinématiques de différentes variantes d'un composant à pivot flexible selon l'invention ;
- la figure 11 montre différentes variantes d'un élément élastique équivalent cinématiquement à une biellette soumise à un couple de rappel élastique à chacune de ses extrémités ;
- la figure 12 est une vue en perspective d'un exemple de réalisation du composant à pivot flexible selon l'invention ;
- les figures 13 à 15 sont respectivement une vue plane de dessus, une vue en perspective de dessus et une vue en perspective éclatée d'un autre exemple de composant à pivot flexible ; cet exemple n'est pas couvert par les revendications mais est utile à la compréhension de l'invention ; et
- les figures 16 et 17 sont respectivement une vue en perspective de dessus et une vue en perspective de dessous d'un autre exemple de réalisation du composant à pivot flexible selon l'invention, associé à un balancier.

Dans tout ce qui suit, les caractéristiques géométriques du composant à pivot flexible sont définies en référence à sa position de repos.

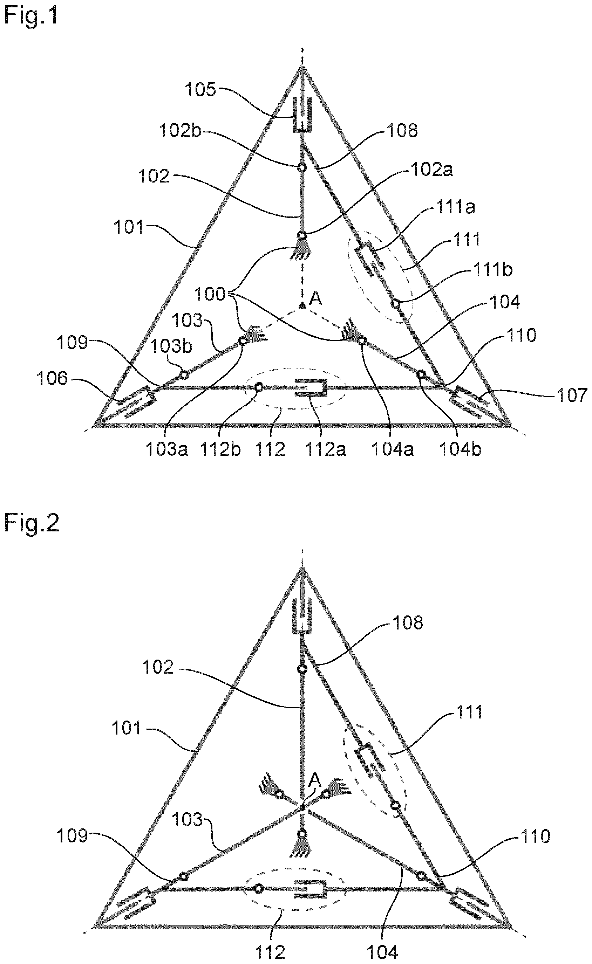

Le principe de l'invention est illustré par le schéma cinématique de la figure 1. Une partie rigide mobile 101, représentée par un triangle équilatéral, est guidée en rotation par rapport à un support 100 autour d'un axe de rotation virtuel A par un pivot comprenant trois biellettes 102, 103, 104. Les trois biellettes 102, 103, 104 s'étendent le long des bissectrices du triangle équilatéral qui s'intersectent sur l'axe A. Chaque biellette 102, 103, 104 est jointe par une de ses extrémités au support 100 via une articulation de type charnière 102a, 103a, 104a et par son autre extrémité à une partie rigide intermédiaire respective 108, 109, 110 via une autre articulation de type charnière 102b, 103b, 104b. Les parties rigides intermédiaires 108, 109, 110 sont mobiles les unes par rapport aux autres et sont guidées en translation par rapport à la partie rigide mobile 101 le long respectivement des bissectrices du triangle équilatéral par des articulations de type glissière 105, 106, 107. Les parties rigides intermédiaires 108 et 110 sont en outre reliées directement l'une à l'autre par une articulation 111 comprenant, en série, une glissière 111a orientée parallèlement au côté correspondant du triangle et une charnière 111b. De même, les parties rigides intermédiaires 109 et 110 sont reliées directement l'une à l'autre par une articulation 112 comprenant, en série, une glissière 112a orientée parallèlement au côté correspondant du triangle et une charnière 112b. Les biellettes 102, 103, 104 et les glissières 105, 106, 107 sont agencées autour de l'axe A selon une symétrie d'ordre 3.

On voit qu'ainsi, lorsque la partie rigide mobile 101 est tournée, les parties rigides intermédiaires 108, 109, 110 ont chacune un mouvement combiné de rotation et de translation radiale par rapport à l'axe A, l'ensemble qu'elles forment se contractant ou se dilatant à la manière de la fermeture et de l'ouverture d'un diaphragme à iris en fonction du sens de rotation de la partie rigide mobile 101 et du signe de l'angle de rotation de la partie rigide mobile 101 par rapport à sa position d'équilibre illustrée à la figure 1.

Ce système est isostatique et présente un seul degré de liberté (rotation de la partie rigide mobile 101 par rapport au support 100 autour de l'axe A). La présence des trois biellettes 102, 103, 104 contribue à diminuer les déplacements parasites de l'axe A en comparaison des pivots à seulement deux biellettes. La rotation de la partie rigide mobile 101 s'effectue sans surcontraintes grâce aux glissières 105, 106, 107. Les articulations 111, 112 entre les parties rigides intermédiaires 108, 109, 110 obligent ces dernières à se déplacer de la même manière et suppriment ainsi, vis-à-vis de la partie rigide mobile 101, les degrés de liberté apportés par les glissières 105, 106, 107. Ce système ne présente pas de degrés de liberté interne qui peuvent nuire à la tenue aux chocs ou rendre le système plus sensible à la gravité.

A la figure 1, les biellettes 102, 103, 104 s'arrêtent avant d'atteindre l'axe A, ce qui permet de donner au système une forme plane. On peut néanmoins réaliser le système sur plusieurs niveaux, comme illustré à la figure 2, pour que les biellettes 102, 103, 104 dépassent l'axe A. Les biellettes 102, 103, 104 peuvent alors se croiser (sur l'axe A) en des points situés à environ 50% de leur longueur pour maximiser la course de la partie rigide mobile 101.

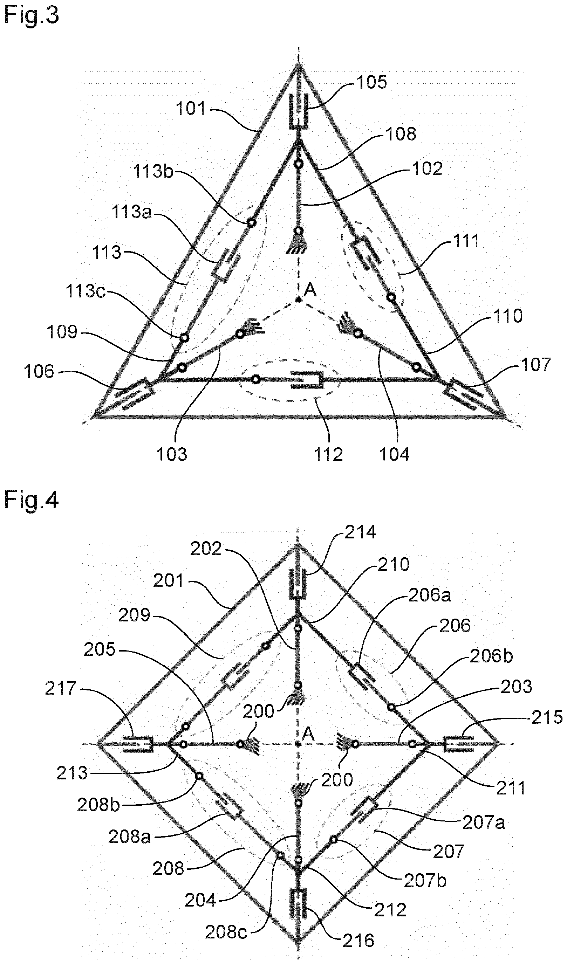

La figure 3 montre une variante qui reprend les caractéristiques de celle de la figure 1 mais dans laquelle les parties rigides intermédiaires 108 et 109 sont reliées directement l'une à l'autre par une articulation 113 comprenant, en série, une glissière 113a orientée parallèlement au côté correspondant du triangle et une charnière 113b. Une charnière supplémentaire 113c peut être prévue pour éviter des surcontraintes. L'articulation 113 n'est pas nécessaire pour la cinématique, mais elle permet d'améliorer la symétrie du système et, par voie de conséquence, de rendre le système moins sensible à la gravité, même en position de repos, l'affaissement de la structure devenant moins dépendant de la direction de la gravité et la masse étant mieux répartie.

Le nombre de biellettes 102, 103, 104, de parties rigides intermédiaires 108, 109, 110 et de glissières 105, 106, 107 peut être supérieur à trois. La figure 4 montre une variante à quatre biellettes 202, 203, 204, 205, quatre parties rigides intermédiaires 210, 211, 212, 213 et quatre glissières 214, 215, 216, 217. La partie rigide mobile, 201, est représentée par un carré. Depuis les sommets du carré s'étendent, en direction de l'axe A, les glissières 214, 215, 216, 217 suivies des biellettes 202, 203, 204, 205. Une articulation 206 comprenant une glissière 206a orientée parallèlement au côté correspondant du carré et une charnière 206b en série relie directement les parties rigides intermédiaires 210 et 211 entre elles. De même, une articulation 207 comprenant une glissière 207a orientée parallèlement au côté correspondant du carré et une charnière 207b en série relie directement les parties rigides intermédiaires 211 et 212 entre elles. Les biellettes 202, 203, 204, 205 et les glissières 214, 215, 216, 217 sont agencées autour de l'axe A selon une symétrie d'ordre 4. Pour améliorer la symétrie du système, une articulation 208 comprenant, en série, une glissière 208a, une charnière 208b et, de préférence, une charnière supplémentaire 208c pour éviter les surcontraintes peut relier directement les parties rigides intermédiaires 212 et 213 entre elles, et une articulation 209 similaire peut relier directement les parties rigides 214 et 217 entre elles.

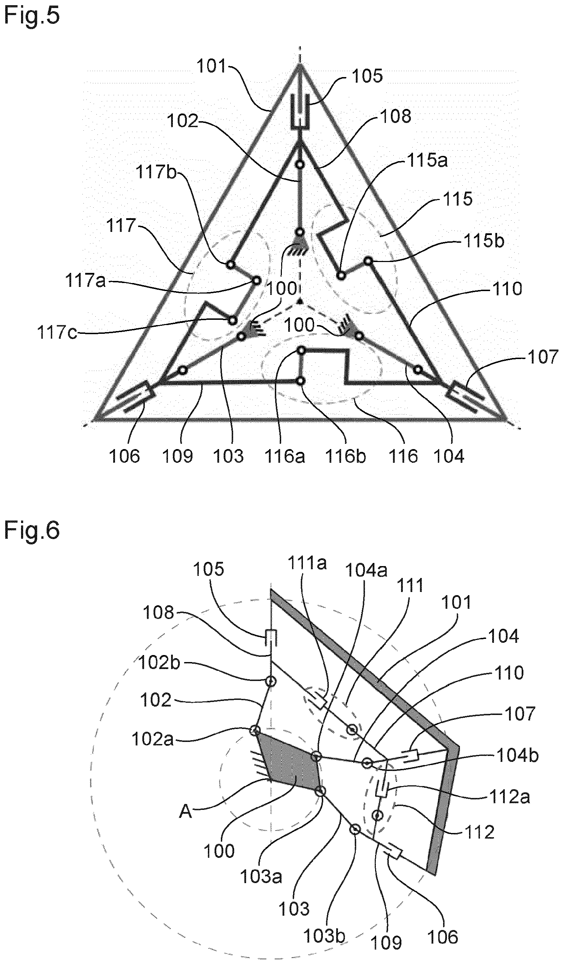

A la figure 5 est représentée une variante à trois biellettes 102, 103, 104, trois parties rigides intermédiaires 108, 109, 110 et trois glissières 105, 106, 107 dans laquelle les articulations, désignées par 115 et 116, qui relient directement la partie rigide intermédiaire 110 aux parties rigides intermédiaires 108 et 109 comprennent chacune deux charnières 115a, 115b, 116a, 116b en série plutôt qu'une glissière et une charnière. Comme à la figure 3, la partie rigide intermédiaire 108 peut aussi être reliée directement à la partie rigide intermédiaire 109 par une articulation 117. En plus de ses deux charnières 117a, 117b, cette articulation 117 peut comprendre une charnière supplémentaire 117c pour éviter les surcontraintes. L'architecture de la figure 5 présente l'avantage d'être particulièrement simple à mettre en oeuvre avec des éléments élastiques.

Les différentes variantes illustrées aux figures 1 à 5 sont préférées dans la mesure où elles présentent, au moins en grande partie, une symétrie centrale autour de l'axe A, ce qui notamment réduit la dépendance à la gravité, et où leur biellettes 102 à 104 et 202 à 205 sont orientées radialement, donnant au système un comportement symétrique plus simple à gérer et maximisant la course pour laquelle le déplacement parasite de l'axe A est minimal. Cependant, de nombreuses autres configurations performantes sont possibles, avec une absence de symétrie et/ou des biellettes inclinées par rapport à la direction radiale.

A titre d'exemple, et en utilisant les mêmes repères qu'à la figure 1 pour des éléments similaires, la figure 6 montre un système asymétrique dans lequel, en outre, les biellettes 102, 103, 104 sont non radiales. L'axe de rotation virtuel A correspond au centre du cercle passant par les charnières 102a, 103a, 104a des biellettes 102, 103, 104. Les biellettes 102, 103, 104 sont d'égale longueur. Les glissières 105, 106, 107 sont orientées radialement par rapport à l'axe A. Les biellettes 102, 103, 104 sont orientées de telle sorte que leurs axes forment le même angle avec les axes des glissières 105, 106, 107 qui leur sont respectivement connectées. Il résulte de cette condition que dans l'une des positions de la partie rigide mobile 101, appelée position neutre, les trois axes des biellettes 102, 103, 104 coupent l'axe A. La glissière 111a (respectivement 112a) de l'articulation 111 (respectivement 112) qui relie les parties rigides intermédiaires 108, 110 (respectivement 108, 109) s'étend selon un axe qui est perpendiculaire à la bissectrice des axes des glissières 105, 107 (respectivement 106, 107). Il résulte de ce couplage entre les trois parties rigides intermédiaires 108, 109, 110 que les mouvements des trois charnières 102b, 103b, 104b se font de manière nécessairement concentrique par rapport à l'axe A. Ce système, comme celui des figures précédentes, présente un seul degré de liberté (rotation de la partie rigide mobile 101 par rapport au support 100 autour de l'axe A) et est dénué de degrés de liberté internes. Il est aussi dénué d'hyperstatisme.

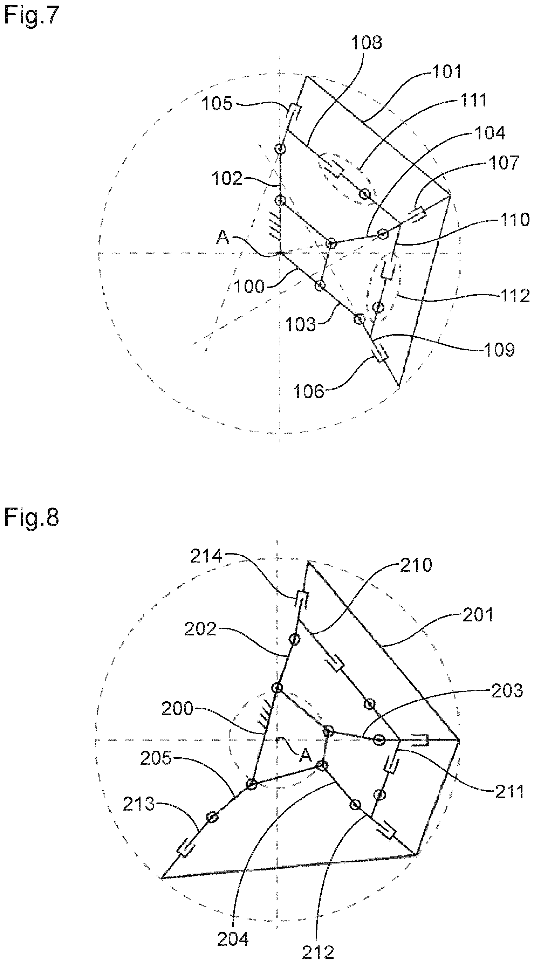

Un autre exemple de système asymétrique est représenté à la figure 7, où les biellettes 102, 103, 104 sont radiales mais où les axes des glissières 105, 106, 107 ne se croisent pas sur l'axe A.

Par analogie avec la figure 4, des systèmes asymétriques peuvent être conçus avec plus de trois biellettes 202, 203, 204, 205 / parties rigides intermédiaires 210, 211, 212, 213, comme montré à la figure 8.

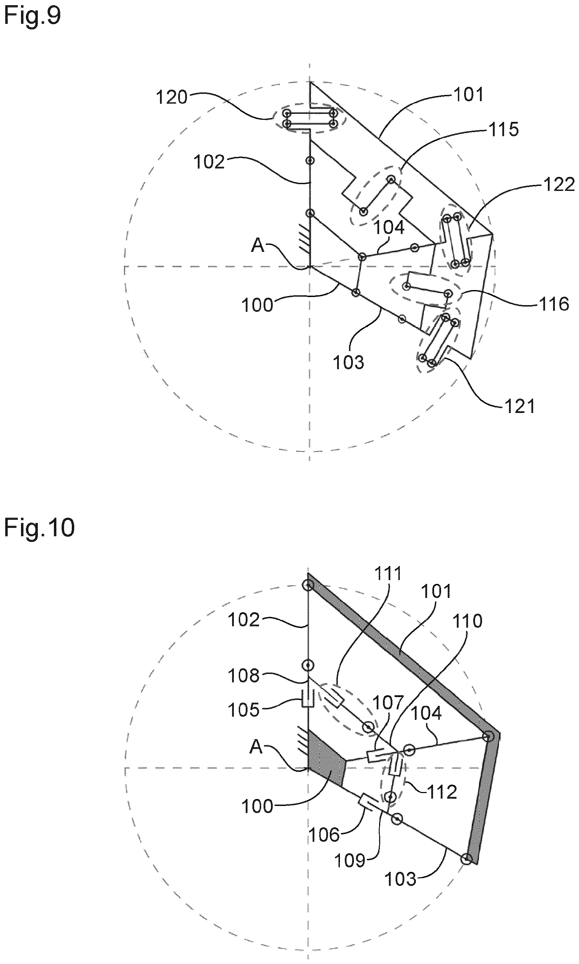

Quels que soient le nombre de biellettes et le caractère symétrique ou asymétrique du système, toutes les articulations pourraient être constituées de charnières. Un exemple est illustré à la figure 9 où chaque glissière 105, 106, 107 de la figure 5 est remplacée par un agencement de charnières 120, 121, 122.

Il est en outre possible d'intervertir les biellettes 102, 103, 104 et les glissières 105, 106, 107, c'est-à-dire de placer les biellettes 102, 103, 104 entre les parties rigides intermédiaires 108, 109, 110 et la partie rigide mobile 101 et de placer les glissières 105, 106, 107 entre le support 100 et les parties rigides intermédiaires 108, 109, 110, ainsi qu'il est illustré à la figure 10.

On comprendra par ailleurs que dans tous les exemples ci-dessus on peut intervertir les fonctions de la partie rigide mobile et du support. La partie extérieure désignée par 101, 201 pourrait en effet être fixe et constituer le support et la partie intérieure désignée par 100, 200 pourrait être la partie rigide mobile.

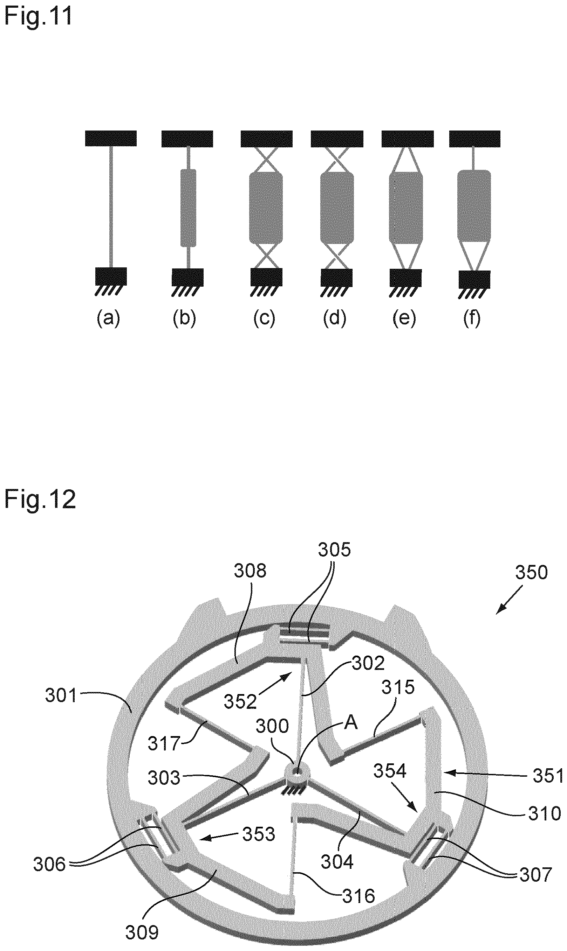

La figure 11 montre différentes manières de réaliser concrètement, par des éléments flexibles, les biellettes 102 à 104 et 202 à 205 et leurs charnières illustrées aux figures 1 à 10 et les articulations à charnières 115, 116, 117 illustrées aux figures 5 et 9. Chaque biellette 102 à 104 et 202 à 205 avec ses charnières et chaque articulation à charnières 115, 116, 117 peut par exemple prendre l'une des formes suivantes :
- une simple lame élastique (figure 11(a)),
- un segment rigide articulé à chacune de ses deux extrémités par un col élastique (figure 11(b)),
- un segment rigide articulé à chacune de ses deux extrémités par deux lames croisées non séparées, c'est-à-dire se croisant dans un même plan (figure 11(c)),
- un segment rigide articulé à chacune de ses deux extrémités par deux lames croisées séparées, c'est-à-dire se croisant dans deux plans différents (figure 11(d)),
- un segment rigide articulé à chacune de ses deux extrémités par un pivot à centre de rotation déporté dit « RCC » (Remote Center Compliance) comprenant deux lames élastiques qui convergent (figure 11(e)),
- un segment rigide articulé à une de ses extrémités par un col élastique et à son autre extrémité par un pivot à centre de rotation déporté (figure 11(f)), et plus généralement un segment rigide articulé en rotation à une de ses extrémités par un premier type d'articulation flexible et à son autre extrémité par un deuxième type d'articulation flexible.

Les articulations de type glissière 105 à 107 et 214 à 217 peuvent être réalisées par exemple sous la forme de deux lames élastiques parallèles ou de deux segments rigides parallèles articulés à leurs extrémités par des cols élastiques (deux segments articulés tels que celui illustré à la figure 11(b)).

Que ce soit pour les charnières ou les glissières, chaque articulation flexible produit par rapport aux articulations idéales 102a, 102b, 103a, 103b, 104a, 104b, 105, 106, 107 un couple ou une force de rappel élastique lorsqu'elle est sollicitée.

La figure 12 montre un exemple de réalisation concrète d'un composant à pivot flexible 350 basée sur le principe des figures 1 à 10 et plus particulièrement de la figure 5. Le composant 350 est ici un oscillateur horloger destiné à remplir la fonction d'un balancier-spiral mais il pourrait être une ancre, une bascule, un levier ou autre.

Le composant 350 présente une partie rigide mobile extérieure 301, un support central 300 et un pivot flexible 351. La partie rigide mobile extérieure 301, de forme annulaire dans l'exemple représenté, constitue la partie inertielle de l'oscillateur. Le support central 300 est destiné à être fixé sur un bâti fixe ou mobile, typiquement sur le bâti d'un mouvement horloger. Le pivot flexible 351 suspend la partie rigide mobile extérieure 301 au support central 300, la guide en rotation par rapport au support central 300 autour d'un axe de rotation virtuel A et exerce sur elle un couple de rappel élastique dès qu'elle s'écarte d'une position d'équilibre.

Le pivot flexible 351 comprend au moins trois liaisons élastiques 352, 353, 354 reliant, en parallèle, le support central 300 et la partie rigide mobile extérieure 301. Chaque liaison élastique 352, 353, 354 comprend, en série, une lame élastique 302, 303, 304, une partie rigide intermédiaire 308, 309, 310 et une paire de lames élastiques parallèles 305, 306, 307. Dans chaque liaison élastique 352, 353, 354, la lame élastique 302, 303, 304 s'étend radialement par rapport à l'axe A, entre le support central 300 et la partie rigide intermédiaire 308, 309, 310, et les deux lames élastiques parallèles 305, 306, 307 s'étendent tangentiellement par rapport à l'axe A, donc perpendiculairement à la lame élastique 302, 303, 304, et relient la partie rigide intermédiaire 308, 309, 310 à la partie rigide mobile extérieure 301. Le pivot flexible 351 comprend en outre des lames élastiques 315, 316, 317, orientées radialement par rapport à l'axe A, qui relient directement les parties rigides intermédiaires 308, 309, 310 entre elles. Les liaisons élastiques 352, 353, 354 et les lames élastiques 315, 316, 317 guident les parties rigides intermédiaires 308, 309, 310 à la fois en rotation et en translation radiale par rapport à l'axe A lorsque la partie rigide mobile extérieure 301 est pivotée par rapport au support central 300 autour de l'axe A. Le pivot flexible 351 présente de préférence une symétrie d'ordre N par rapport à l'axe A, où N est le nombre de liaisons élastiques 352, 353, 354.

On comprendra que les lames élastiques 302, 303, 304, les paires de lames parallèles 305, 306, 307 et les lames élastiques 315, 316, 317 correspondent respectivement aux biellettes 102, 103, 104, aux glissières 105, 106, 107 et aux articulations à charnières 115, 116, 117 de la figure 5. Le degré de liberté supplémentaire apporté par la charnière 117c sur la figure 5 peut être omis, le composant 350 étant fabriqué de manière monolithique.

Chacune des lames élastiques 302 à 307 et 315 à 317 peut être remplacée par un élément élastique du type de celui représenté à l'une quelconque des figures 11(b) à 11(f).

A la lumière notamment de l'enseignement basé sur les figures 6 et 7, les lames élastiques 302, 303, 304, 315, 316, 317 pourraient être inclinées par rapport à la direction radiale, dans le but par exemple, pour ce qui concerne les lames 302, 303, 304, de produire un défaut d'isochronisme compensant un autre défaut dans le mécanisme horloger auquel appartient le composant 350 ou de protéger lesdites lames du flambage. De même, les lames élastiques parallèles 305, 306, 307 pourraient être inclinées par rapport à la direction tangentielle.

En outre, les lames élastiques 302, 303, 304 et les lames élastiques parallèles 305, 306, 307 pourraient être interverties selon le modèle proposé à la figure 10.

Le composant 350 présente le double avantage d'avoir une forme plane et d'offrir à la partie rigide mobile extérieure 301 une rotation propre, avec peu ou pas de déplacements parasites de l'axe de rotation virtuel A. Dans le cas d'un oscillateur, l'absence de déplacements parasites de l'axe de rotation virtuel A minimise en outre l'influence de la gravité sur la fréquence de l'oscillateur et améliore ainsi la chronométrie. De plus, le fait que la partie mobile extérieure 301 est rigide, plutôt que formée de portions rigides couplées par des éléments élastiques, facilite la gestion de sa tenue aux chocs, de sa dilatation thermique et de la compensation à apporter (par exemple par le dépôt d'un revêtement sur le pivot flexible 351) entre la dérive thermique de la raideur du pivot flexible 351 et celle de l'inertie de la partie mobile extérieure 301. La résistance aux chocs est aussi améliorée par les lames élastiques parallèles de guidage en translation 305, 306, 307 qui protègent les lames élastiques de guidage en rotation 302, 303, 304 d'efforts de traction ou de compression en absorbant les chocs radiaux. Les lames élastiques parallèles 305, 306, 307 diminuent également la sensibilité de la structure au flambage lorsque l'une des lames élastiques 302, 303, 304 est sollicitée en compression.

On notera par ailleurs que, dans le cas d'un oscillateur, le défaut d'isochronisme (variation de la fréquence en fonction de l'amplitude d'oscillation) peut être réglé en modifiant la non-linéarité du couple de rappel du pivot flexible 351 ou la variation d'inertie de l'oscillateur. Pour modifier la non-linéarité du couple de rappel, on peut jouer sur la raideur des éléments flexibles dont la déformation est de second ordre par rapport à la rotation de la partie rigide mobile extérieure 301, à savoir les paires de lames parallèles 305, 306, 307 et les lames élastiques 315, 316, 317. Pour modifier la variation d'inertie de l'oscillateur, on peut jouer sur la masse et la position du centre de masse des parties rigides intermédiaires 308, 309, 310.

Le composant 350 peut être en silicium, en silicium recouvert de dioxyde de silicium, en verre, en saphir, en quartz, en verre métallique, en métal ou en alliage, par exemple. Selon le matériau choisi, le composant est réalisé de façon monolithique par gravure (notamment gravure ionique réactive profonde dite DRIE), LIGA, fraisage, électroérosion, moulage ou autre.

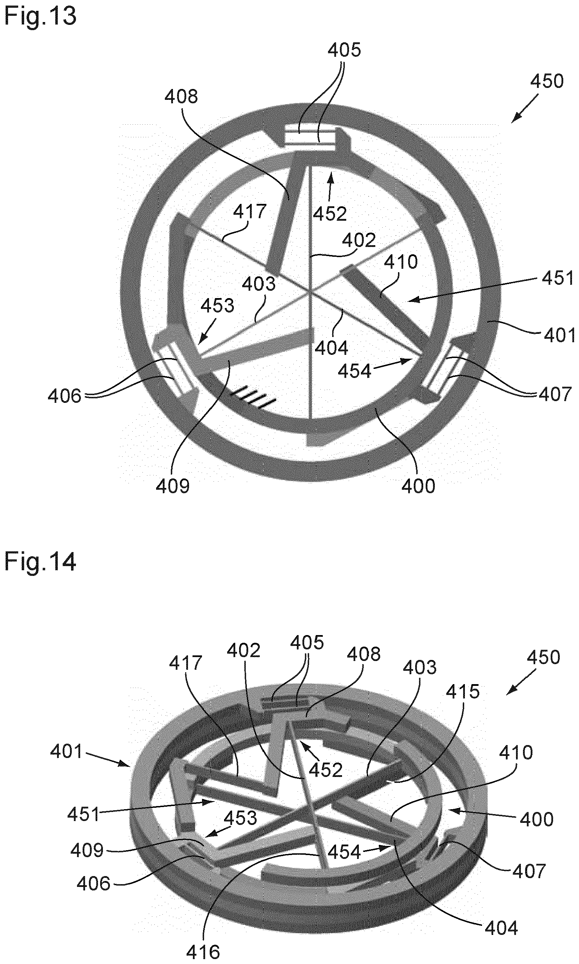

Les figures 13 à 15 montrent un autre exemple de réalisation concrète d'un composant à pivot flexible 450 non couvert par le jeu de revendications annexé, basé sur le principe des figures 1 à 10 et plus particulièrement de la figure 2. Le composant 450 est ici un oscillateur horloger destiné à remplir la fonction d'un balancier-spiral mais il pourrait être une ancre, une bascule, un levier ou autre.

Ce composant 450 comprend une partie rigide mobile extérieure 401, un support intérieur 400 et un pivot flexible 451 remplissant les mêmes fonctions, respectivement, que la partie rigide mobile extérieure 301, le support central 300 et le pivot flexible 351 du composant 350 illustré à la figure 12.

Ce composant 450 est constitué d'au moins trois étages 460, 461, 462 pouvant chacun être réalisés de façon monolithique dans l'un des matériaux indiqués ci-dessus et par l'une des techniques indiquées ci-dessus. Les étages 460, 461, 462 sont assemblés entre eux par soudage, en particulier soudage par thermocompression (thermocompression bonding), soudage eutectique (eutectic bonding) ou soudage polymère (polymer bonding), par brasage, par collage ou autre.

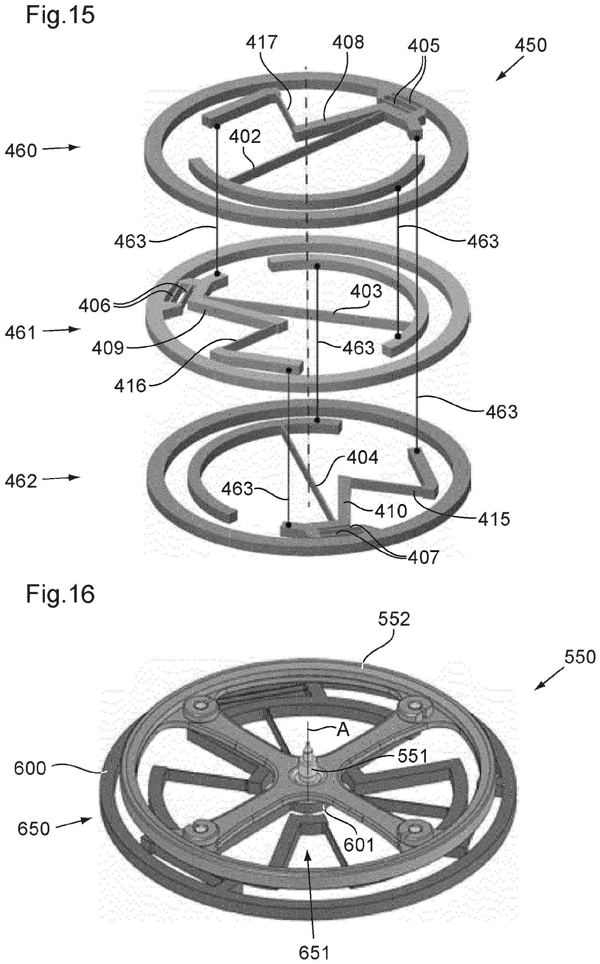

La partie rigide mobile extérieure 401, le support intérieur 400 et le pivot flexible 451 sont chacun répartis sur les différents étages 460, 461, 462. Les traits 463 à la figure 15 montrent où les parties rigides du composant 450 sont connectées les unes aux autres.

Comme dans le mode de réalisation de la figure 12, le pivot flexible 451 comprend au moins trois liaisons élastiques 452, 453, 454 reliant, en parallèle, le support intérieur 400 et la partie rigide mobile extérieure 401 et comprenant chacune, en série, une lame élastique 402, 403, 404, une partie rigide intermédiaire 408, 409, 410 et une paire de lames élastiques parallèles 405, 406, 407. Le pivot flexible 451 comprend en outre trois lames élastiques 415, 416, 417 reliant directement entre elles les parties rigides intermédiaires 408, 409, 410. Ces liaisons élastiques 452, 453, 454 et ces lames élastiques 415, 416, 417 minimisent les déplacements parasites de l'axe de rotation virtuel A.

Comme dans le mode de réalisation de la figure 12, le pivot flexible 451 présente de préférence une symétrie d'ordre N par rapport à l'axe de rotation virtuel A en projection orthogonale dans un plan perpendiculaire à l'axe A, où N est le nombre d'étages / de liaisons élastiques, ceci afin de donner une rigidité radiale uniforme au composant et d'uniformiser ainsi l'affaissement du composant dans les différentes positions verticales, donc les différences de marche dans ces positions. La construction des figures 13 à 15 permet toutefois aux lames élastiques 402, 403, 404, situées chacune sur un étage respectif 460, 461, 462, de se croiser, et avantageusement de se croiser en un point situé à la moitié de leur longueur afin d'optimiser la course de la partie rigide mobile extérieure 401 par rapport au support intérieur 400.

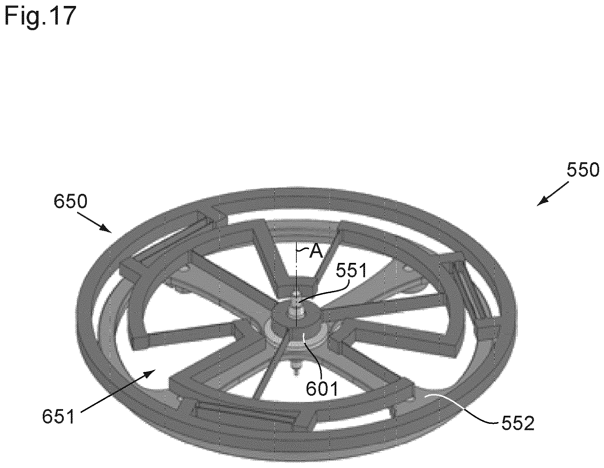

Les figures 16 et 17 montrent un oscillateur horloger 550 comprenant un composant à pivot flexible 650 similaire au composant 350 de la figure 12 mais dans lequel la partie extérieure, désignée par 600, est fixe et constitue le support et la partie centrale, désignée par 601, constitue la partie rigide guidée en rotation par le pivot flexible 651 autour de l'axe de rotation virtuel A. La partie centrale 601 est un moyeu monté sur un arbre 551 sur lequel est également monté un balancier 552. L'ensemble arbre 551 et balancier 552 n'est tenu et guidé que par le composant à pivot flexible 650 et son moyeu 601. Les extrémités de l'arbre 551 ne sont donc pas destinées à frotter contre des paliers. Elles peuvent néanmoins coopérer avec des butées fixes lors de chocs pour protéger le pivot flexible 651.

Le balancier 552 constitue la partie inertielle de l'oscillateur 550 et le pivot flexible 651 sa partie élastique. A la différence d'un oscillateur à pivot flexible classique et à l'instar d'un oscillateur balancier-spiral, l'oscillateur 550 a donc des parties inertielle et élastique qui sont séparées. Une telle séparation permet au balancier 552 d'être réalisé dans un matériau différent du matériau - généralement fragile - du pivot flexible 651, en particulier dans un matériau dense tel que le cuivre au béryllium, l'or ou le platine. Le balancier 552 peut ainsi présenter un petit diamètre pour un moment d'inertie donné. De la sorte, les frottements avec l'air seront réduits et le facteur de qualité sera augmenté.

La séparation de la partie inertielle et du pivot flexible facilite en outre le réglage de la fréquence de l'oscillateur 550. Le moment d'inertie et le balourd du balancier 552 peuvent en effet être mesurés et corrigés facilement tandis que le couple du pivot flexible 651 peut être mesuré sans assemblage préalable avec le balancier 552 et modifié indépendamment du balancier 552. De surcroît, il est possible d'appairer le balancier 552 et le pivot flexible 651, en d'autres termes d'associer un balancier ayant un moment d'inertie choisi avec un pivot flexible produisant un couple choisi afin d'obtenir une fréquence souhaitée.

Un autre avantage du composant 550 est la fixation du support 600 rendue plus aisée et plus précise par le fait que le support 600 est une partie extérieure éloignée du centre. Encore un autre avantage est la possibilité, comme déjà évoqué, de protéger le pivot flexible 651 contre des déformations permanentes ou des ruptures de ses éléments élastiques dues à des chocs ou des perturbations externes en utilisant des butées centrales coopérant avec l'arbre 551. De telles butées centrales diminuent le couple de frottement par rapport à des butées coopérant avec une partie rigide mobile extérieure et réduisent ainsi le risque de fortes perturbations voire d'arrêts inopinés du fonctionnement de l'oscillateur.

Le balancier 552 peut être du même type que celui des oscillateurs balancier-spiral traditionnels et peut être fixé sur l'arbre 551 de manière classique par rivetage. Selon le matériau du composant, le moyeu 601 peut être fixé à l'arbre 551 par collage, soudage, brasage, chassage ou serrage au moyen de bras élastiques, par exemple. Un moyeu qui est déformé lors de son montage sur l'arbre 551 est considéré comme rigide dans la présente invention, en ce sens qu'il ne se déforme pas ou quasiment pas pendant le fonctionnement régulier de l'oscillateur.

De préférence, le centre de masse de la partie inertielle de l'oscillateur 550 est dans le plan médian du pivot flexible pour éviter de créer un balourd dans la direction axiale. Pour ce faire, on peut prévoir un deuxième balancier monté sur l'arbre 551 et symétrique du balancier 552 par rapport audit plan médian ou un deuxième composant à pivot flexible symétrique du composant 650 par rapport au plan médian du balancier 552.

## Revendications

1. Composant à pivot flexible comprenant un support (300 ; 600) et une partie rigide mobile (301 ; 601) suspendue au support (300 ; 600) par un pivot flexible (351 ; 651) agencé pour guider en rotation la partie rigide mobile (301 ; 601) par rapport au support (300 ; 600) autour d'un axe de rotation virtuel (A), le composant à pivot flexible étant plan et monolithique, le pivot flexible (351 ; 651) comprenant au moins trois liaisons élastiques (352, 353, 354) reliant, en parallèle, le support (300 ; 600) et la partie rigide mobile (301 ; 601), le composant à pivot flexible étant **caractérisé en ce que** chaque liaison élastique (352, 353, 354) comprend, en série, un premier organe élastique (302, 303, 304), une partie rigide intermédiaire (308, 309, 310) et un deuxième organe élastique (305, 306, 307), et **en ce que** le pivot flexible (351 ; 651) comprend en outre des troisièmes organes élastiques (315, 316, 317) reliant chacun, directement, une dite partie rigide intermédiaire (308, 309, 310) à une autre.

2. Composant à pivot flexible selon la revendication 1, **caractérisé en ce que** le premier organe élastique (302, 303, 304) de chaque liaison élastique (352, 353, 354) est constitué par une lame élastique ou par un segment rigide articulé en rotation à ses extrémités par des articulations élastiques.

3. Composant à pivot flexible selon la revendication 1 ou 2, **caractérisé en ce que** le premier organe élastique (302, 303, 304) de chaque liaison élastique (352, 353, 354) s'étend sensiblement radialement par rapport à l'axe de rotation virtuel (A).

4. Composant à pivot flexible selon l'une quelconque des revendications 1 à 3, **caractérisé en ce que** le deuxième organe élastique (305, 306, 307) de chaque liaison élastique (352, 353, 354) comprend deux éléments élastiques sensiblement parallèles.

5. Composant à pivot flexible selon l'une quelconque des revendications 1 à 4, **caractérisé en ce que** le deuxième organe élastique (305, 306, 307) de chaque liaison élastique (352, 353, 354) s'étend sensiblement tangentiellement par rapport à l'axe de rotation virtuel (A).

6. Composant à pivot flexible selon l'une quelconque des revendications 1 à 5, **caractérisé en ce que** les premier et deuxième organes élastiques (302, 303, 304, 305, 306, 307) de chaque liaison élastique (352, 353, 354) s'étendent sensiblement perpendiculairement l'un à l'autre.

7. Composant à pivot flexible selon l'une quelconque des revendications 1 à 6, **caractérisé en ce que** chacun des troisièmes organes élastiques (315, 316, 317) est constitué par une lame élastique ou par un segment rigide articulé en rotation à ses extrémités par des articulations élastiques.

8. Composant à pivot flexible selon l'une quelconque des revendications 1 à 7, **caractérisé en ce que** les troisièmes organes élastiques (315, 316, 317) s'étendent sensiblement radialement par rapport à l'axe de rotation virtuel (A).

9. Composant à pivot flexible selon l'une quelconque des revendications 1 à 8, **caractérisé en ce que** les liaisons élastiques (352, 353, 354) sont agencées autour de l'axe de rotation virtuel (A) sensiblement selon une symétrie centrale d'ordre N en projection orthogonale dans un plan perpendiculaire à l'axe de rotation virtuel (A), où N est le nombre des liaisons élastiques (352, 353, 354 ; 452, 453, 454).

10. Composant à pivot flexible selon l'une quelconque des revendications 1 à 9, **caractérisé en ce que** le pivot flexible (351 ; 651) présente sensiblement une symétrie centrale d'ordre N par rapport à l'axe de rotation virtuel (A) en projection orthogonale dans un plan perpendiculaire à l'axe de rotation virtuel (A), où N est le nombre des liaisons élastiques (352, 353, 354).

11. Composant à pivot flexible selon l'une quelconque des revendications 1 à 10, **caractérisé en ce que** le nombre des liaisons élastiques (352, 353, 354) est de trois.

12. Oscillateur horloger destiné à remplir la fonction d'un balancier-spiral, comprenant au moins un composant à pivot flexible (350 ; 650) selon l'une quelconque des revendications 1 à 11.

13. Oscillateur horloger selon la revendication 12, **caractérisé en ce qu'**il comprend au moins un balancier (552) solidaire d'un arbre (551) solidaire d'un moyeu que forme la partie rigide mobile (601) du ou de chaque composant à pivot flexible (650).

14. Pièce d'horlogerie, par exemple montre-bracelet, montre de poche, montre pendentif ou pendulette, comprenant un composant à pivot flexible selon l'une quelconque des revendications 1 à 11 ou un oscillateur horloger selon la revendication 12 ou 13.

## Patentansprüche

1. Komponente mit flexiblem Zapfen, die eine Stütze (300; 600) und einen beweglichen starren Teil (301; 601) umfasst, der an der Spitze (300; 600) durch einen flexiblen Zapfen (351; 651) aufgehängt ist, der dazu gestaltet ist, den beweglichen starren Teil (301; 601) in Bezug auf die Stütze (300; 600) um eine virtuelle Drehachse (A) drehbar zu führen, wobei die Komponente mit flexiblem Zapfen eben und monolithisch ist, wobei der flexible Zapfen (351; 651) mindestens drei elastische Verbindungen (352, 353, 354) umfasst, welche die Stütze (300; 600) und den beweglichen starren Teil (301; 601) parallel verbinden, wobei die Komponente mit flexiblem Zapfen **dadurch gekennzeichnet ist, dass** jede elastische Verbindung (352, 353, 354) in Reihe ein erstes elastisches Organ (302, 303, 304), einen starren Zwischenteil (308, 309, 310) und ein zweites elastisches Organ (305, 306, 307) umfasst, und dadurch, dass der flexible Zapfen (351; 651) ferner dritte elastische Organe (315, 316, 317) umfasst, die jeweils einen starren Zwischenteil (308, 309, 310) direkt mit einem anderen verbinden.

2. Komponente mit flexiblem Zapfen nach Anspruch 1, **dadurch gekennzeichnet, dass** das erste elastische Organ (302, 303, 304) von jeder elastischen Verbindung (352, 353, 354) aus einer elastischen Klinge oder aus einem starren Segment besteht, das an seinen Enden durch elastische Gelenke drehbar gelenkig gelagert ist.

3. Komponente mit flexiblem Zapfen nach Anspruch 1 oder 2, **dadurch gekennzeichnet, dass** das erste elastische Organ (302, 303, 304) von jeder elastischen Verbindung (352, 353, 354) sich im Wesentlichen radial in Bezug auf die virtuelle Drehachse (A) erstreckt.

4. Komponente mit flexiblem Zapfen nach einem der Ansprüche 1 bis 3, **dadurch gekennzeichnet, dass** das zweite elastische Organ (305, 306, 307) von jeder elastischen Verbindung (352, 353, 354) zwei im Wesentlichen parallele elastische Elemente umfasst.

5. Komponente mit flexiblem Zapfen nach einem der Ansprüche 1 bis 4, **dadurch gekennzeichnet, dass** das zweite elastische Organ (305, 306, 307) von jeder elastischen Verbindung (352, 353, 354) sich im Wesentlichen tangential in Bezug auf die virtuelle Drehachse (A) erstreckt.

6. Komponente mit flexiblem Zapfen nach einem der Ansprüche 1 bis 5, **dadurch gekennzeichnet, dass** das erste und das zweite elastische Organ (302, 303, 304, 305, 306, 307) von jeder elastischen Verbindung (352, 353, 354) sich im Wesentlichen senkrecht zueinander erstrecken.

7. Komponente mit flexiblem Zapfen nach einem der Ansprüche 1 bis 6, **dadurch gekennzeichnet, dass** jedes der dritten elastischen Organe (315, 316, 317) aus einer elastischen Klinge oder aus einem starren Segment besteht, das an seinen Enden durch elastische Gelenke drehbar gelenkig gelagert ist.

8. Komponente mit flexiblem Zapfen nach einem der Ansprüche 1 bis 7, **dadurch gekennzeichnet, dass** die dritten elastischen Organe (315, 316, 317) sich im Wesentlichen radial in Bezug auf die virtuelle Drehachse (A) erstrecken.

9. Komponente mit flexiblem Zapfen nach einem der Ansprüche 1 bis 8, **dadurch gekennzeichnet, dass** die elastischen Verbindungen (352, 353, 354) um die virtuelle Drehachse (A) herum im Wesentlichen gemäß einer Punktsymmetrie der Ordnung N in der Orthogonalprojektion in einer Ebene senkrecht zur virtuellen Drehachse (A) eingerichtet sind, wo N die Anzahl der elastischen Verbindungen (352, 353, 354; 452, 453, 454) ist.

10. Komponente mit flexiblem Zapfen nach einem der Ansprüche 1 bis 9, **dadurch gekennzeichnet, dass** der flexible Zapfen (351; 651) im Wesentlichen eine Punktsymmetrie der Ordnung N in Bezug auf die virtuelle Drehachse (A) in der Orthogonalprojektion in einer Ebene senkrecht zur virtuellen Drehachse (A) aufweist, wo N die Anzahl der elastischen Verbindungen (352, 353, 354) ist.

11. Komponente mit flexiblem Zapfen nach einem der Ansprüche 1 bis 10, **dadurch gekennzeichnet, dass** die Anzahl der elastischen Verbindungen (352, 353, 354) drei beträgt.

12. Oszillator einer Uhr, der dazu bestimmt ist, die Funktion einer Unruh-Spiralfeder zu erfüllen und mindestens eine Komponente mit flexiblem Zapfen (350; 650) nach einem der Ansprüche 1 bis 11 umfasst.

13. Oszillator einer Uhr nach Anspruch 12, **dadurch gekennzeichnet, dass** er mindestens eine Unruh (552) umfasst, die fest mit einer Welle (551) verbunden ist, die fest mit einer Nabe verbunden ist, die den beweglichen starren Teil (601) der oder jeder Komponente mit flexiblem Zapfen (650) bildet.

14. Uhr, zum Beispiel Armbanduhr, Taschenuhr, Anhängeuhr oder Pendulette, die eine Komponente mit flexiblem Zapfen nach einem der Ansprüche 1 bis 11 oder einen Oszillator einer Uhr nach Anspruch 12 oder 13 umfasst.

## Claims

1. Component with a flexible pivot comprising a support (300; 600) and a movable rigid part (301; 601) suspended from the support (300; 600) by a flexible pivot (351; 651) arranged to guide the movable rigid part (301; 601) in rotation with respect to the support (300; 600) about a virtual axis of rotation (A), the component with a flexible pivot being planar and monolithic, the flexible pivot (351; 651) comprising at least three elastic connections (352, 353, 354) connecting, in parallel, the support (300; 600) and the movable rigid part (301; 601), the component with a flexible pivot being **characterised in that** each elastic connection (352, 353, 354) comprises, in series, a first elastic member (302, 303, 304), an intermediate rigid part (308, 309, 310) and a second elastic member (305, 306, 307), and **in that** the flexible pivot (351; 651) further comprises third elastic members (315, 316, 317) each connecting, directly, one said intermediate rigid part (308, 309, 310) to another.

2. Component with a flexible pivot as claimed in claim 1, **characterised in that** the first elastic member (302, 303, 304) of each elastic connection (352, 353, 354) is formed by an elastic strip or by a rigid segment rotationally articulated at its ends by elastic joints.

3. Component with a flexible pivot as claimed in claim 1 or 2, **characterised in that** the first elastic member (302, 303, 304) of each elastic connection (352, 353, 354) extends substantially radially with respect to the virtual axis of rotation (A).

4. Component with a flexible pivot as claimed in any one of claims 1 to 3, **characterised in that** the second elastic member (305, 306, 307) of each elastic connection (352, 353, 354) comprises two substantially parallel elastic elements.

5. Component with a flexible pivot as claimed in any one of claims 1 to 4, **characterised in that** the second elastic member (305, 306, 307) of each elastic connection (352, 353, 354) extends substantially tangentially with respect to the virtual axis of rotation (A).

6. Component with a flexible pivot as claimed in any one of claims 1 to 5, **characterised in that** the first and second elastic members (302, 303, 304, 305, 306, 307) of each elastic connection (352, 353, 354) extend substantially perpendicularly to one another.

7. Component with a flexible pivot as claimed in any one of claims 1 to 6, **characterised in that** each of the third elastic members (315, 316, 317) is formed by an elastic strip or by a rigid segment rotationally articulated at its ends by elastic joints.

8. Component with a flexible pivot as claimed in any one of claims 1 to 7, **characterised in that** the third elastic members (315, 316, 317) extend substantially radially with respect to the virtual axis of rotation (A).

9. Component with a flexible pivot as claimed in any one of claims 1 to 8, **characterised in that** the elastic connections (352, 353, 354) are arranged about the virtual axis of rotation (A) substantially according to a central symmetry of order N in orthogonal projection in a plane perpendicular to the virtual axis of rotation (A), where N is the number of elastic connections (352, 353, 354; 452, 453, 454).

10. Component with a flexible pivot as claimed in any one of claims 1 to 9, **characterised in that** the flexible pivot (351; 651) essentially has a central symmetry of order N with respect to the virtual axis of rotation (A) in orthogonal projection in a plane perpendicular to the virtual axis of rotation (A), where N is the number of elastic connections (352, 353, 354).

11. Component with a flexible pivot as claimed in any one of claims 1 to 10, **characterised in that** the number of elastic connections (352, 353, 354) is three.

12. Timepiece oscillator intended to fulfil the function of a balance-hairspring, comprising at least one component with a flexible pivot (350; 650) as claimed in any one of claims 1 to 11.

13. Timepiece oscillator as claimed in claim 12, **characterised in that** it comprises at least one balance (552) fixedly attached to a shaft (551) fixedly attached to a hub formed by the movable rigid part (601) of the or each component with a flexible pivot (650).

14. Timepiece, for example a wristwatch, pocket watch, pendant watch or miniature clock, comprising a component with a flexible pivot as claimed in any one of claims 1 to 11 or a timepiece oscillator as claimed in claim 12 or 13.
